(19) Europäisches Patentamt

European Patent Office

Office européen des brevets

(11) **EP 1 099 260 B1**

(12) **EUROPÄISCHE PATENTSCHRIFT**

(45) Veröffentlichungstag und Bekanntmachung des Hinweises auf die Patenterteilung:
**23.01.2002 Patentblatt 2002/04**

(51) Int Cl.$^7$: **H01L 41/04**

(21) Anmeldenummer: **99945897.9**

(86) Internationale Anmeldenummer:
**PCT/DE99/02056**

(22) Anmeldetag: **02.07.1999**

(87) Internationale Veröffentlichungsnummer:
**WO 00/04590 (27.01.2000 Gazette 2000/04)**

(54) **VERFAHREN UND VORRICHTUNG ZUM ANSTEUERN WENIGSTENS EINES KAPAZITIVEN STELLGLIEDES**

METHOD AND DEVICE FOR CONTROLLING AT LEAST ONE CAPACITIVE ACTUATOR

PROCEDE ET DISPOSITIF POUR COMMANDER AU MOINS UN ACTIONNEUR CAPACITIF

(84) Benannte Vertragsstaaten:
**DE ES FR GB IT**

(30) Priorität: **14.07.1998 DE 19831599**

(43) Veröffentlichungstag der Anmeldung:
**16.05.2001 Patentblatt 2001/20**

(73) Patentinhaber: **SIEMENS AKTIENGESELLSCHAFT 80333 München (DE)**

(72) Erfinder:
• **HOFFMANN, Christian D-93057 Regensburg (DE)**
• **FREUDENBERG, Hellmut D-93080 Grossberg (DE)**
• **GERKEN, Hartmut D-93152 Nittendorf (DE)**
• **HECKER, Martin D-93336 Laimerstadt (DE)**
• **PIRKL, Richard D-93053 Regensburg (DE)**
• **RIEDEL, Günther D-90469 Nürnberg (DE)**

(56) Entgegenhaltungen:
**DE-C- 19 652 809**

EP 1 099 260 B1

**Beschreibung**

Die Erfindung betrifft ein Verfahren zum Ansteuern wenigstens eines kapazitiven Stellgliedes, insbesondere eines Piezostellgliedes für ein Kraftstoffeinspritzventil einer Brennkraftmaschine, gemäß dem Oberbegriff des Patentanspruchs 1. Die Erfindung betrifft auch eine Vorrichtung zur Durchführung dieses Verfahrens.

Aus US 5,691,592 ist eine Vorrichtung zum Ansteuern wenigstens eines Piezostellgliedes bekannt, bei welchem das Stellglied aus einer Reihenschaltung eines mittels einer Spannungsquelle auf eine Sollspannung geladenen Ladekondensators und eines Umladekondensators geladen und anschließend in den Umladekondensator entladen wird. Sobald der Umladekondensator eine vorgegebene Spannung erreicht hat, wird die Restladung des Stellgliedes mittels eines Shuntreglers vernichtet.

Aus DE 196 32 837 A1 ist ein Verfahren und eine Vorrichtung zum Ansteuern wenigstens eines Piezostellgliedes für ein Kraftstoffeinspritzventil einer Brennkraftmaschine bekannt, bei welchem das Stellglied aus einer Reihenschaltung eines mittels einer regelbaren Spannungsquelle auf eine Sollspannung geladenen Ladekondensators und eines Umladekondensators geladen und anschließend in den Umladekondensator entladen wird. Der Ladekondensator wird anschließend so nachgeladen, daß die Spannung an der Reihenschaltung von Ladekondensator und Umladekondensator der Sollspannung entspricht.

Aus DE 196 32 871 C2 ist ein Verfahren und eine Vorrichtung zum Ansteuern wenigstens eines Piezostellgliedes für ein Kraftstoffeinspritzventil einer Brennkraftmaschine bekannt, bei welchem das Stellglied aus einer Reihenschaltung eines mittels einer regelbaren Spannungsquelle auf eine Sollspannung geladenen Ladekondensators und eines Umladekondensators geladen und anschließend in die Parallelschaltung aus Lade-und Umladekondensator entladen wird. Der Ladekondensator wird anschließend so nachgeladen, daß die Spannung an der Reihenschaltung von Ladekondensator und Umladekondensator der Sollspannung entspricht.

Die beiden letztgenannten Verfahren funktionieren bei Brennkraftmaschinen nur im stationären, eingeschwungenen Zustand für einen bestimmten Arbeitspunkt der Schaltung, ohne stochastische Rückwirkung des Stellgliedes auf die Ansteuerschaltung, hervorgerufen durch dynamische Übergänge der Brennkraftmaschine bzw. eines von ihr angetriebenen Kraftfahrzeugs, wie beispielsweise:

- Drehzahlschwankungen bei Start und Abschalten sowie beim Übergang vom und zum Leerlauf der Brennkraftmaschine,
- Übergang vom Schubbetrieb zum regulären Betrieb und umgekehrt,

- bei Variation des Abstandes von Vor- zu Haupteinspritzung, bei stochastischen Nacheinspritzungen,
- bei Variation der zurückgespeisten Ladung vom Stellglied in den Umladekondensator.

Durch die Rückwirkungen infolge solcher dynamischer Übergänge wird die Spannung am Umladekondensator, die auch von der Stellgliedkapazität, der Motordrehzahl, dem Kraftstoffdruck u.s.w. abhängt, beim Rückladen beeinflußt und führt im Umladekondensator zu Änderungen, insbesondere zu Vergrößerungen der Ladeenergie und damit der an ihm anliegenden Spannung.

Infolgedessen muß sich auch die Spannung am Ladekondensator ändern, insbesondere verkleinern, um diesen dynamischen Änderungen folgen zu können und um die Summenspannung an Ladeund Umladekondensator für die nächste Ansteuerung des Stellgliedes konstant zu halten, was aber nicht so schnell möglich ist, wie es erforderlich wäre. Ein Verkleinern der Spannung am Ladekondensator durch Abregeln der Spannungsquelle würde zu lange dauern. Eine schnelle Entladung des Ladekondensators wäre nur mit zusätzlichem Aufwand mehrerer Schalter, was auch zusätzliche Verlustleistung zur Folge hätte, und aufwendiger Ansteuerungssoftware zu erreichen.

Der Erfindung liegt deshalb die Aufgabe zugrunde, die bekannte Vorrichtung und das Verfahren dahingehend zu verbessern, daß sie in der Lage sind, die beschriebenen Rückwirkungen des Stellgliedes auf die Ansteuerschaltung bei dynamischen Übergängen zu kompensieren.

Diese Aufgabe wird gemäß den Merkmalen des Patentanspruchs 1 dadurch gelöst, daß der Umladekondensator C2 wesentlich kleiner als der Ladekondensator C1 dimensioniert wird (C2<<C1) und beim Entladen des Stellgliedes nur bis zu einem vorgebbaren Spannungswert geladen wird, und daß die darüber hinausgehende Restladung des Stellgliedes in den Ladekondensator C1 abgeführt wird, an welchem sie infolge des Kapazitätsverhältnisses C1>>C2 von Lade- und Umladekondensator nur einen unwesentlichen, vernachlässigbaren Spannungshub erzeugt. Auf diese Weise werden Rückwirkungen des Stellgliedes auf die Ansteuerschaltung bei dynamischen Übergängen kompensiert.

Dieses Verfahren wird in einer Vorrichtung mit den Merkmalen des Anspruchs 5 durchgeführt. Vorteilhafte Ausgestaltungen der Erfindung sind den Unteransprüchen zu entnehmen.

Von besonderem Vorteil ist, daß die bekannte Schaltung nur um wenige Bauelemente erweitert werden muß, um diese Aufgabe zu lösen, und daß die Spannungsquelle eine Konstantspannungsquelle sein kann.

Im folgenden werden unter Bezugnahme auf die schematische Zeichnung zwei Ausführungsbeispiele der erfindungsgemäßen Vorrichtung beschrieben und anschließend das Verfahren erläutert. Es zeigen:

Figur 1:   die Schaltung eines ersten Ausführungsbeispiels, und

Figur 2:   die Schaltung eines zweiten Ausführungsbeispiels.

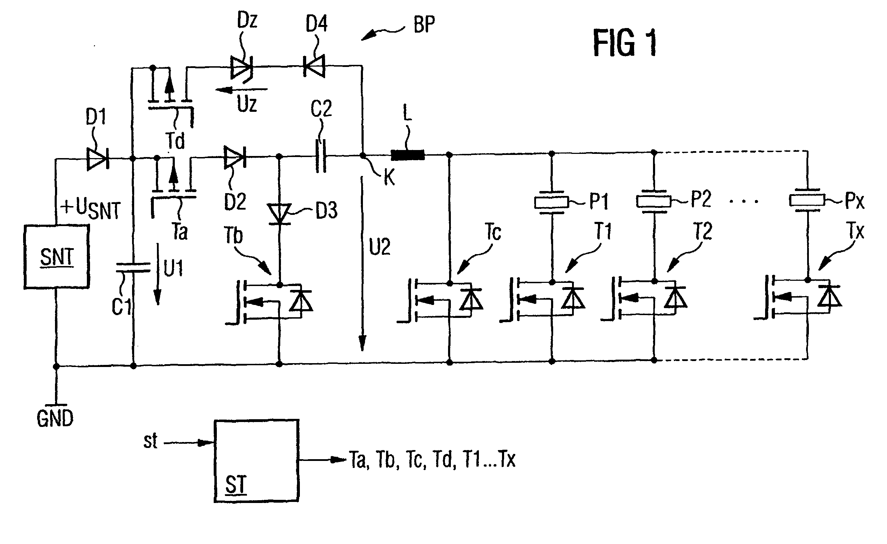

Figur 1 zeigt ein erstes Ausführungsbeispiel
nach der Erfindung anhand einer Vorrichtung zum Ansteuern von weiter nicht dargestellten Kraftstoffeinspritzventilen einer Brennkraftmaschine mittels piezoelektrischer Stellglieder Pn (n = 1,...,x) durch eine Steuerschaltung ST, die Teil eines weiter nicht dargestellten
mikroprozessor-gesteuerten Motorsteuergerätes ist.

Zwischen dem Pluspol $+U_{SNT}$ und dem Minuspol GND einer Konstantspannungsquelle SNT, vorzugsweise eines Schaltnetzteils, ist eine Reihenschaltung einer vom Pluspol weg stromleitenden ersten Diode D1
und eines Ladekondensators C1 angeordnet.

Parallel zum Ladekondensator C1 ist eine Reihenschaltung aus einem Ladeschalter Ta, aus zwei von
ihm weg stromleitenden Dioden D2 und D3 und aus einem mit dem Minuspol verbundenen Entladeschalter Tb
angeordnet. Die Dioden D1...D3 sind Sperrdioden.

Vom Verbindungspunkt der beiden Dioden D2
und D3 führt eine Reihenschaltung des Umladekondensators C2, einer Umladespule L, eines ersten Stellgliedes P1 und eines ersten Auswahlschalters T1 zum Minuspol GND.

Wie oben bereits beschrieben, soll C1>>C2
gewählt sein (beispielsweise C1 $\approx$ 100*C2, mit C1 =
680µF und C2 = 6.8µF).

Für jedes weitere Kraftstoffeinspritzventil ist eine Reihenschaltung aus je einem Stellglied Pn (n = 2,...,
x) und einem diesem Stellglied zugeordneten Auswahlschalter Tn (n = 2,...,x) der Reihenschaltung aus dem
ersten Stellglied P1 und dem ersten Power-MOSFET-
Schalter T1 parallel geschaltet.

Den parallelen Reihenschaltungen der Stellglieder und Auswahlschalter ist ein weiterer Schalter Tc
parallelgeschaltet.

Dieser weitere Schalter Tc wird von der Steuerschaltung ST angesteuert, wenn die Stellgliedspannung einen vorgegebenen Grenzwert überschreitet
oder wenn ein in der Brennkraftmaschine bis hin zu den
Leistungsendstufen der Einspritzventile auftretender
Fehler erkannt wird, und entlädt die kapazitiven Stellglieder Pn kurzschlußartig über die Inversdioden der
Auswahlschalter T1 bis Tx. Der weitere Schalter Tc wird
auch zum Aufladen des Entladekondensators C2 vor
der ersten Stellgliedbetätigung oder zu dessen Nachladen zwischen zwei zeitlich weit auseinanderliegenden
Stellgliedbetätigungen benötigt.

Vom Verbindungspunkt K zwischen Umladekondensator C2 und Umladespule L zum Verbindungspunkt zwischen Ladekondensator C1 und Ladeschalter
Ta führt ein Begrenzerpfad BP, bestehend aus der Reihenschaltung einer in Richtung zum Ladekondensator
C1 hin stromleitenden vierten Diode D4, einer in dieser
Richtung sperrenden Zenerdiode DZ und eines Begrenzerschalters Td, welcher in diesem Ausführungsbeispiel
synchron mit dem Entladeschalter Tb leitend und nichtleitend gesteuert wird. Die Diode D4 im Begrenzerpfad
BP verhindert ein Kurzschließen der Konstantspannungsquelle SNT, wenn der Entladeschalter Tb und der
Begrenzerschalter Td geschlossen, d.h. leitend sind.
Der Begrenzerschalter Td verhindert ein Entladen eines
geladenen Stellgliedes P1 bis Px über den Begrenzerpfad in den Ladekondensator C1. Die Zenerspannung
Uz der Zenerdiode DZ ist so zu wählen, daß auch bei
minimaler Energierückgewinnung die Spannung U2 von
der Zenerdiode DZ bestimmt wird.

Sämtliche Schalter werden von einer Steuerschaltung ST, abhängig von Steuersignalen st eines
nicht dargestellten Motorsteuergerätes, gesteuert.

Die Auswahlschalter Tn (n = 1 bis x), der Entladeschalter Tb und der weitere Schalter Tc sind in diesem Ausführungsbeispiel N-Power-MOSFET-Schalter,
welche üblicherweise Inversdioden enthalten. Ladeschalter Ta und Begrenzerschalter Td sind in diesem
Ausführungsbeispiel als P-Power-MOSFET-Schalter
ausgebildet.

Im folgenden wird das Verfahren erläutert, mit
welchem die in Figur 1 beschriebene Vorrichtung betrieben wird. Mit diesem Verfahren soll der Umladekondensator C2 beim Entladen des Stellgliedes nur bis zu einem vorgegebenen, konstanten Wert U2 aufgeladen
werden.

Da die Spannungsabfälle an Schaltern und Dioden gegenüber den Spannungen am Ladekondensator, am Umladekondensator, und der Zenerdiode vernachlässigbar klein sind, sollen sie in den Spannungen
U1 (am Ladekondensator C1), U2 (am Umladekondensator C2) und Uz (Durchbruchspannung der Zenerdiode
DZ) bereits enthalten sein.

Beim Einschalten der Vorrichtung vor Betriebsbeginn wird der Ladekondensator C1 auf U1 aufgeladen und ist der Entladekondensator C2 entladen
und die Umschwingspule L stromlos.

Vor der ersten Betätigung eines Stellgliedes
soll an der Reihenschaltung von C1 + C2 bereits die volle Sollspannung Us anliegen. Mit angenommenen Werten U1 = 60V, Uz = 20V und U2 = U1 + Uz = 80V in
diesem Ausführungsbeispiel ergibt sich:

$$Us = U1 + U2 = 2*U1 + Uz = 140V.$$

Damit auch der Kondensator C2 vor der ersten Stellgliedbetätigung aufgeladen wird, wird zunächst der weitere Schalter Tc leitend gesteuert. Dadurch entlädt sich
C1 über C2, L und Tc. Sodann wird Tc wieder nichtleitend gesteuert und nun der Entladeschalter Tb leitend
gesteuert. Dadurch fließt ein Strom in Gegenrichtung
durch L, C2, Tb und die Inversdiode des weiteren Schalters Tc, wodurch der Umladekondensator C2 aufgeladen und so gepolt wird, daß nach einem oder mehreren
Lade-und Entladezyklen an ihm eine Spannung U2 anliegt, welche die Spannung U1 erhöht.

Zum Betätigen eines Stellgliedes durch ein Steuersignal st werden der Ladeschalter Ta und der dem entsprechenden Stellglied, beispielsweise P1, zugeordnete Auswahlschalter T1 leitend gesteuert. Es fließt ein Strom vom Kondensator C1, der von der Spannungsquelle SNT nachgeladen wird, über Ta, D2, C2, L, P1 und T1 nach GND, wodurch das Stellglied geladen wird.

Anschließend werden Ta und T1 nichtleitend gesteuert. Der Ladezustand des Stellgliedes P1 bleibt erhalten, bis nach Verschwinden des Steuersignals st der Entladeschalter Tb und synchron mit ihm der Begrenzerschalter Td leitend gesteuert werden. Bei leitendem Entladeschalter Tb werden alle Stellglieder Pn über die Spule L entladen. Der Entladestrom fließt zunächst in den Umladekondensator C2, wobei die Spannung U2 ansteigt. Übersteigt die - am Verbindungspunkt K meßbare - Spannung U2 den Wert U1 + Uz = 80V, so wird die überschüssige Ladung über den Begrenzerpfad BP in den Ladekondensator C1 gespeichert. Für den Fall, daß beim Entladen der Stellglieder der Umladekondensator C2 nicht genügend aufgeladen würde, müsste die Spannungsquelle SNT regelbar sein, um den Ladekondensator C1 so nachladen zu können, daß U1 + U2 = Us.

Auch beim erstmaligen Aufladen des Umladekondensators C2 wird, wie oben beschrieben, die überschüssige Ladung über den Begrenzerpfad in den Ladekondensator C1 geführt. Auf diese Weise wird der Kondensator C2 vor der ersten Betätigung eines Stellgliedes auf die Spannung U2 (in diesem Ausführungsbeispiel = 80V) aufgeladen.

Nach Beendigung des Ansteuervorgangs eines Stellgliedes kann der Ansteuervorgang des nächsten Stellgliedes auf die gleiche Weise, wie eben beschrieben, erfolgen.

Wenn man Uz = 0V wählt, kann die Zenerdiode DZ aus dem Begrenzerpfad entfernt werden. und verursacht keine Verlustleistung. Dann wird U2 = U1.

Da die Stellglieder P1 bis Px untereinander variieren, d.h., unterschiedliche Kapazitäten aufweisen, aber auch die dynamischen Übergänge der Brennkraftmaschine auf die einzelnen Zylinder unterschiedliche stochastische Rückwirkungen haben, und dementsprechend auch die Stellglieder unterschiedliche stochastische Rückwirkungen auf die Ansteuerschaltung ausüben, ist gemäß einem zweiten Ausführungsbeispiel der Erfindung vorgesehen, daß die Sollspannung Usn für jedes einzelne Stellglied Pn zylinderselektiv vorgegeben werden kann.

Dies wird dadurch erreicht, daß der Umladekondensator C2 beim Entladen eines Stellgliedes Pn-1, z.B. P1, auf eine Spannung U2n geladen wird, welche zusammen mit der Spannung U1 die Ladespannung (Sollspannung Usn) für das nächste Stellglied, z.B. P2, bildet. Beim Entladevorgang des Stellgliedes Pn-1 wird in diesem Fall zunächst der Schalter Tb leitend gesteuert und das Stellglied Pn-1 in den Umladekondensator C2 entladen sowie die zwischen Verbindungspunkt K und Minuspol GND abfallende Spannung U2 gemessen. Wenn diese den in der Steuerschaltung ST gebildeten oder ihr vom - nicht dargestellten - Motorsteuergerät übermittelten Wert U2n überschreitet, wird der Begrenzerschalter Td leitend gesteuert und die Restladung des Stellgliedes Pn-1 in den Ladekondensator C1 geführt, wodurch die Spannung U2 = U2n nicht weiter ansteigt. Damit sind Ladekondensator C1 und Umladekondensator C2 auf die Summenspannung Usn = U1 + U2n des nächsten anzusteuernden Stellgliedes Pn geladen.

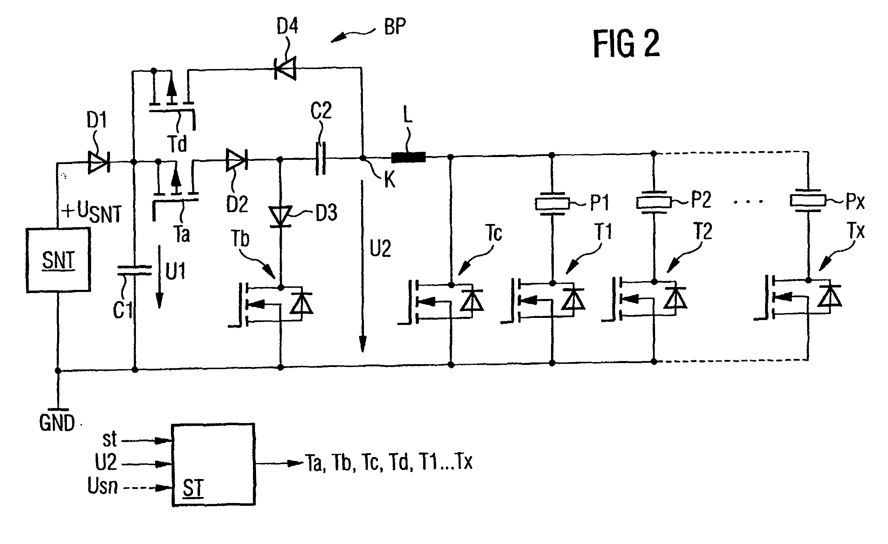

In Figur 2 ist eine Schaltung zur Durchführung dieses Verfahrens gezeigt, die im wesentlichen mit der Schaltung nach Figur 1 übereinstimmt. Der Unterschied besteht darin, daß im Begrenzerpfad keine Zenerdiode DZ enthalten ist (wie im ersten Ausführungsbeispiel mit Uz = 0V) und daß die Spannung U2 immer dann, wenn der Entladeschalter Tb leitend gesteuert ist, der Steuerschaltung ST zugeführt wird, in ihr mit einem dem nächsten Stellglied Pn zugeordneten, vorgegebenen Wert U2n verglichen wird und der Schalter Td wie oben beschrieben, leitend gesteuert wird, wenn U2 den vorgegebenen Wert U2n erreicht oder überschreitet.

Mit den beschriebenen Verfahren und den beiden Vorrichtungen zur Durchführung dieser Verfahren lassen sich die aufgeführten Rückwirkungen der Stellglieder auf die Ansteuerschaltung bei dynamischen Übergängen - entweder für alle Zylinder gemeinsam oder zylinderselektiv - auf einfache Weise kompensieren bzw. eliminieren.

**Patentansprüche**

1. Verfahren zum Ansteuern wenigstens eines kapazitiven Stellgliedes (Pn) mittels einer Steuerschaltung (ST), insbesondere wenigstens eines piezoelektrisch betriebenen Kraftstoffeinspritzventils einer Brennkraftmaschine, wobei das Stellglied (Pn) mit einer an eine Reihenschaltung eines Ladekondensators (C1) und eines Umladekondensators (C2) gelegten Sollspannung (Us = U1 + U2; Usn = U1 + U2n) geladen und in den Umladekondensator (C2) entladen wird, welcher dabei auf einen vorgegebenen Spannungswert (U2, U2n) geladen wird, **dadurch gekennzeichnet,**

   - **daß** die Kapazität des Ladekondensators (C1) sehr viel größer als die Kapazität des Umladekondensators (C2) ist ($C_1 >> C_2$), und
   - **daß** die verbleibende Restladung des Stellgliedes (Pn) in den Ladekondensator (C1) geladen wird, wenn der Umladekondensator (C2) den vorgegebenen Spannungswert (U2, U2n) erreicht hat.

**2.** Verfahren nach Anspruch 1, **dadurch gekennzeichnet, daß** der vorgegebene Spannungswert (U2, U2n), auf welchen der Umladekondensator (C2) beim Entladen eines Stellgliedes (Pn) geladen wird, der Summe U2 = U1 + Uz der Spannung (U1) am Ladekondensator (C1) und der Durchbruchspannung (Uz) einer mit dem Ladekondensator (C1) in Reihe geschalteten Zenerdiode (DZ) entspricht.

**3.** Verfahren nach Anspruch 1 oder 2, **dadurch gekennzeichnet, daß** in der Steuerschaltung (ST) ein in ihr gebildeter oder ihr zugeführter Wert für die Sollspannung (Usn) jedes Stellgliedes (Pn) vorgesehen ist, und daß der Umladekondensator (C2) beim Entladen eines Stellgliedes (Pn-1) auf eine dem nächsten zu ladenden Stellglied (Pn) zugeordnete Spannung gemäß der Formel U2n = Usn - U1 geladen wird.

**4.** Vorrichtung zur Durchführung des Verfahrens nach einem der Ansprüche 1 bis 3, mit einem Ladekondensator (C1), der zwischen dem Pluspol (+SNT) und dem Minuspol (GND) einer Spannungsquelle (SNT) angeordnet ist, mit einer parallel zum Ladekondensator (C1) angeordneten Reihenschaltung aus einem Ladeschalter (Ta) und einem mit dem Minuspol verbundenen Entladeschalter (Tb), mit einer parallel zum Entladeschalter (Tb) angeordneten Reihenschaltung eines Umladekondensators (C2), einer Umladespule (L), eines ersten Stellgliedes (P1) und eines ersten Auswahlschalters (T1), und für jedes weitere Stellglied (Pn) mit einer dem ersten Stellglied (P1) und dem ersten Auswahlschalter (T1) parallel geschalteten Reihenschaltung aus je einem Stellglied (Pn) und einem diesem Stellglied zugeordneten Auswahlschalter (Tn), und mit einer Steuerschaltung (ST) von welcher alle Schalter (Ta, Tb, Td, T1,...,Tx) gesteuert werden, mit n = 2,...,x,
**dadurch gekennzeichnet,**

- **daß** der Ladekondensator (C1) sehr viel größer als der Umladekondensator (C2) dimensioniert ist (C1>>C2),
- **daß** vom Verbindungspunkt (K) zwischen Umladekondensator (C2) und Umladespule (L) zum Verbindungspunkt zwischen Ladekondensator (C1) und Ladeschalter (Ta) ein Begrenzerpfad (BP) geschaltet ist, und
- **daß** der Begrenzerpfad (BP) aus einer Reihenschaltung einer in Richtung zum Ladekondensator (C1) hin stromleitenden Diode (D4) und einem Begrenzerschalter (Td) besteht.

**5.** Vorrichtung nach Anspruch 4, **dadurch gekennzeichnet, daß** der Begrenzerschalter (Td) leitend gesteuert wird, sobald der Umladekondensator (C2) beim Entladen eines Stellgliedes (Pn-1) auf die dem nächsten zu ladenden Stellglied (Pn) zugeordnete Spannung (U2n) geladen ist.

**6.** Vorrichtung nach Anspruch 4, **dadurch gekennzeichnet, daß** im Begrenzerpfad (BP) zwischen der Diode (D4) und dem Begrenzerschalter (Td) eine Zenerdiode (DZ) in Sperrichtung vom Verbindungspunkt (K) zum Ladekondensator (C1) angeordnet ist.

**7.** Vorrichtung nach Anspruch 6, **dadurch gekennzeichnet, daß** der Begrenzerschalter (Td) synchron mit dem Entladeschalter (Tb) leitend und nichtleitend gesteuert wird.

**8.** Vorrichtung nach Anspruch 4, **dadurch gekennzeichnet, daß** die Ausgangsspannung der Spannungsquelle (SNT) regelbar ist.

**Claims**

**1.** Method for triggering at least one capacitive actuator (Pn) via a control circuit (ST), in particular at least one piezo electrically operated fuel injection valve of an internal combustion engine, with the actuator (Pn) being charged with a rated voltage (Us = U1 + U2; Usn = U1 + U2n) which is applied to a series circuit of a charge capacitor (C1) and a discharge capacitor (C2) and is discharged into the discharge capacitor (C2), which in this process is charged to a specified voltage value (U2, U2n), **characterised in that**

- the capacitance of charge capacitor (C1) is much larger than the capacitance of discharge capacitor (C2) (C1>>C2) and

- the remaining residual charge of the actuator (Pn) is loaded into the charge capacitor (C1) when the discharge capacitor (C2) has reached the specified voltage value (U2, U2n).

**2.** Method according to Claim 1 **characterised in that** the specified voltage value (U2, U2n) to which the discharge capacitor (C2) is loaded during the discharge of an actuator (Pn) corresponds to the sum U2 = U1 + Uz of the voltage (U1) at the charge capacitor (C1) and the breakdown voltage (Uz) of a Zener diode (DZ) which is connected in series to the charge capacitor (C1).

**3.** Method according to Claim 1 or 2 **characterised in that** a value for the rated voltage (Usn) of each actuator (Pn) is provided in the control circuit (ST) which is generated or is supplied thereto, and that the discharge capacitor (C2) upon the discharge of an actuator (Pn-1) is charged to a voltage assigned to the next actuator (Pn) to be charged according to the formula U2n = Usn - U1.

**4.** Device for carrying out the method according to one of Claims 1 to 3, with a charge capacitor (C1) which is arranged between the positive terminal (+SNT) and the negative terminal (GND) of a voltage source (SNT); with a series circuit arranged parallel to the charge capacitor (C1) consisting of a load switch (Ta) and a discharge switch (Tb) which is connected to the negative terminal; with a series circuit, arranged parallel to the discharge switch (Tb), comprising the discharge capacitor (C2), a reload coil (L), a first actuator (P1) and a first selector switch (T1), and for each further actuator (Pn) with a series circuit connected parallel to the first actuator (P1) and the first selector switch (T1), each comprising one actuator (Pn) and one selector switch (Tn) assigned to this actuator; and with a control circuit (ST) from which all switches (Ta, Tb, Td, T1,...,Tx) are controlled, with n = 2,...,x, **characterised in that**

- the charge capacitor (C1) is dimensioned much larger than the discharge capacitor (C2) (C1>>C2),

- a limiter path (BP) is connected from the interconnect point (K) between discharge capacitor (C2) and reload coil (L) to the interconnect point between charge capacitor (C1) and load switch (Ta), and

- the limiter path (BP) comprises a series circuit of a diode (D4), which is conductive in the direction of the charge capacitor (C1), and a limiter switch (Td).

**5.** Device according to Claim 4, **characterised in that** the limiter switch (Td) is conductively controlled as soon as the discharge capacitor (C2) is charged during the discharge of one actuator (Pn-1) to the voltage (U2n) which is assigned to the next actuator (Pn) to be charged.

**6.** Device according to Claim 4, **characterised in that** a Zener diode (DZ) is arranged in the limiter path (BP) between the diode (D4) and the limiter switch (Td) in the blocking direction from interconnect point (K) to the charge capacitor (C1).

**7.** Device according to Claim 6, **characterised in that** the limiter switch (Td) is controlled conductively or non-conductively synchronously with the discharge switch (Tb).

**8.** Device according to Claim 4, **characterised in that** the output voltage of the voltage source (SNT) is regulable.

## Revendications

**1.** Procédé pour commander au moins un actionneur capacitif (Pn) au moyen d'un circuit de commande (ST), en particulier, au moins un injecteur de carburant à commande piézo-électrique appartenant à un moteur à combustion interne, l'actionneur (Pn) étant chargé avec une tension de consigne (Us = U1+ U2 ; Usn = U1 + U2n) appliquée à un circuit série composé d'un condensateur de charge (C1) et d'un condensateur de transfert de charge (C2), et déchargé dans le condensateur de transfert de charge (C2), lequel est alors chargé à une valeur de tension prédéterminée (U2, U2n),
    **caractérisé**

- **en ce que** la capacité du condensateur de charge (C1) est beaucoup plus grande que la capacité du condensateur de transfert de charge (C2) (C1 >> C2) et
- **en ce que** la charge résiduelle de l'actionneur (Pn) est chargée dans le condensateur de charge (C1), lorsque le condensateur de transfert de charge (C2) atteint la valeur de tension prédéterminée (U2, U2n).

**2.** Procédé selon la revendication 1, **caractérisé en ce que** la valeur de tension prédéterminée (U2, U2n) à laquelle le condensateur de transfert de charge (C2) est chargée lors de la décharge d'un actionneur (Pn) correspond à la somme U2 = U1 + Uz de la tension (U1) sur le condensateur de charge (C1) et de la tension de claquage (Uz) d'une diode de Zener (Dz) connectée en série avec le condensateur de charge (C1).

**3.** Procédé selon la revendication 1 ou 2, **caractérisé en ce qu'**il est prévu dans le circuit de commande (ST) une valeur, formée dans ce circuit, ou acheminée à ce circuit, pour la tension de consigne (Usn) de chaque actionneur (Pn) et **en ce que**, lors de la décharge d'un actionneur (Pn-1), le condensateur de transfert de charge est chargé jusqu'à une tension correspondant à l'actionneur suivant (Pn) à charger, conformément à la formule U2n = Usn - U1.

**4.** Dispositif pour la mise en oeuvre du procédé selon une des revendications 1 à 3, comprenant un condensateur de charge (C1) qui est disposé entre le pôle positif (+SNT) et le pôle négatif (GND) d'une source de tension (SNT), un circuit série disposé en parallèle avec le condensateur de charge (C1), qui est composé d'un commutateur de charge (Ta) et d'un commutateur de décharge (Tb) relié au pôle négatif, un circuit série connecté en parallèle avec le commutateur de décharge (Tb), qui est composé d'un condensateur de transfert de charge (C2), d'une bobine de transfert de charge (L), d'un premier actionneur (P1) et d'un premier commutateur sélecteur (T1) et, pour chaque autre actionneur (Pn), un circuit série, connecté en parallèle avec le premier actionneur (P1) et le premier commutateur sélecteur (T1), qui est composé d'un actionneur (Pn) et d'un commutateur sélecteur (Tn) correspondant à cet actionneur, et un circuit de commande (ST) par lequel tous les commutateurs (Ta, Tb, T1,...Tx) sont commandés, avec n = 2,...,x,
  **caractérisé**

- **en ce que** le condensateur de charge (C1) est calculé beaucoup plus grand que le condensateur de transfert de charge (C2) (C1>>C2),
- **en ce qu'**un trajet limiteur (BP) est connecté du point de jonction (K) entre le condensateur de transfert de charge (C2) et la bobine de transfert de charge (L) au point de jonction entre le condensateur de charge (C1) et le commutateur de charge (Ta) et
- **en ce que** le trajet limiteur (BP) est composé d'un circuit série composé d'une diode (D4) qui conduit dans le sens allant vers le condensateur de charge (C1) et d'un commutateur limiteur (Td).

5. Dispositif selon la revendication 4, **caractérisé en ce que** le commutateur limiteur (Td) est rendu conducteur dès que, lors de la décharge d'un actionneur (Pn-1), le condensateur de transfert de charge (C2) est chargé à la tension (U2n) qui correspond à l'actionneur (Pn) suivant à charger.

6. Dispositif selon la revendication 4, **caractérisé en ce qu'**une diode de Zener (DZ) est disposée dans le trajet limiteur (BP) entre la diode (D4) et le commutateur limiteur (Td), avec son sens de blocage dans le sens allant du point de jonction (K) au condensateur de charge (C1).

7. Dispositif selon la revendication 6, **caractérisé en ce que** le commutateur limiteur (Td) est rendu conducteur et non conducteur en synchronisme avec le commutateur de décharge (Tb).

8. Dispositif selon la revendication 4, **caractérisé en ce que** la tension de sortie de la source de tension (SNT) est réglable.

FIG 1

EP 1 099 260 B1

FIG 2